# EUROPÄISCHE PATENTANMELDUNG

(11) **EP 1 033 585 A2**
(43) Veröffentlichungstag der Anmeldung: **06.09.2000**
(21) Anmeldenummer: 00102036.1
(22) Anmeldetag: 02.02.2000
(51) Int. Cl.: G01S 13/76, G01S 13/88, E05B 49/00

(54) **Elektronische Entfernungsbestimmungsvorrichtung und damit ausgerüstete elektronische Sicherungsanlage**

(30) Priorität: 03.03.1999 DE 19909140
(71) Anmelder: DaimlerChrysler AG, 70567 Stuttgart (DE)
(72) Erfinder: Pohlmann, Andreas, 71263 Weil der Stadt (DE); Reinhardt, Matthias, 71364 Winnenden (DE)

(57) **Zusammenfassung**

Die Erfindung bezieht sich auf eine elektronische Vorrichtung zur Bestimmung der Entfernung zwischen zwei Objekten mit Abfragesignalerzeugungsmitteln zum Erzeugen und Senden eines Abfragesignals, Antwortsignalempfangsmitteln sowie einer Auswerteeinheit im einen Objekt und Abfragesignalempfangsmitteln und Anwortsignalerzeugungsmitteln im anderen Objekt, sowie auf eine damit ausgerüstete elektronische Sicherungsanlage, wie eine Fahrzeugschließanlage vom Keyless-go-Typ.

Erfindungsgemäß ist die Auswerteeinheit zur Bestimmung einer entfernungsindikativen Phasendifferenz zwischen Abfragesignal und Antwortsignal eingerichtet.

Verwendung z.B. bei Kraftfahrzeugen zur Bestimmung der Entfernung eines erkannten Authentikationselementes für eine elektronische Schließanlage und/oder Wegfahrsperre vom Fahrzeug.

## Beschreibung

Die Erfindung bezieht sich auf eine elektronische Vorrichtung zur Bestimmung der Entfernung zwischen zwei Objekten nach dem Oberbegriff des Anspruchs 1 und auf eine mit einer solchen Entfernungsbestimmungsvorrichtung ausgerüstete elektronische Sicherungsanlage nach dem Oberbegriff des Anspruchs 8.

Elektronische Entfernungsbestimmungsvorrichtungen sind beispielsweise in Form von Laufzeitmeßvorrichtungen bekannt, bei denen ein vom einen Objekt gesendetes, vorliegend als Abfragesignal bezeichnetes Signal vom anderen Objekt reflektiert wird und als reflektiertes Antwortsignal zum signalsendenden Objekt zurückgelangt, wo eine Auswerteeinheit aus einer Laufzeitmessung anhand des gesendeten Abfragesignals und des zurückreflektierten Antwortsignals auf die Entfernung zwischen den beiden Objekten schließt. Systeme dieses Typs, bei denen das Antwortsignal aus einem passiv reflektierten Signal besteht, sind in der Patentschrift DE 42 40 491 C2 und der Offenlegungsschrift DE 44 07 369 A1 beschrieben.

Aus der Offenlegungsschrift DE 44 36 983 A1 ist eine Vorrichtung der eingangs genannten Art offenbart, bei der zur Entfernungsbestimmung zwischen einem Fahrzeug und einem anderen Objekt, z.B. einem weiteren Fahrzeug, vom einen Objekt ein aus einem zeitlich kurzen Abfrageimpuls durch Expansion erzeugter, zeitgedehnter Abfrageimpuls abgestrahlt wird, der vom anderen Objekt empfangen und dort durch Kompression wieder in den zeitlich kurzen Abfrageimpuls gewandelt wird. Aus letzterem wird ein zeitgedehnter Antwortimpuls erzeugt und zum erstgenannten Objekt zurückübertragen, wo er durch Kompression wieder in einen kurzen Antwortimpuls gewandelt wird, dessen zeitlicher Abstand zum ausgesandten kurzen Abtrageimpuls als Maß für die Entfernung beider Objekte herangezogen wird. Die Dauer des zeitlich kurzen Abfrageimpulses und Antwortimpulses ist so gering zu wählen, z.B. einige Nanosekunden, daß eine derartige Laufzeit aus der Bestimmung des Zeitabstandes beider Impulse für typische betrachtete Entfernungen möglich ist.

Für moderne Kraftfahrzeuge, insbesondere Personenkraftwagen, werden zunehmend elektronische Sicherungsanlagen in Form von Schließanlagen und/oder elektronischen Wegfahrsperren eingesetzt, die von dem oder den berechtigten Fahrzeugnutzern durch ein Authentikationselement in Abhängigkeit davon angesteuert werden können, in welchem Bereich oder Abstand sich das für das betreffende Fahrzeug gültige Authentikationselement relativ zum Fahrzeug befindet. Bei sogenannten Keyless-go-Systemen ist dabei keine aktive Authentikationselementbetätigung durch den Benutzer mehr erforderlich, dieser braucht das Authentikationselement, das z.B. aus einer Chipkarte besteht, lediglich mitzuführen. Je nachdem, wo eine zugehörige Erkennungssensorik ein berechtigendes Authentikationselement feststellt, sind unterschiedliche Sicherungsaktionen auszuführen. Eine Fahrzeugschließanlage dieser Art ist in der nicht vorveröffentlichten, älteren deutschen Patentanmeldung Nr. 198 39 355 beschrieben.

Bei derartigen Schließanlagen und/oder elektronischen Wegfahrsperren von Fahrzeugen und ähnlichen elektronischen Objektsicherungsanlagen, bei denen gewisse Sicherungsaktionen in Abhängigkeit vom Abstand eines Authentikationselementes zum zu sichernden Objekt ausgelöst werden sollen, besteht Bedarf an einer möglichst einfachen Bestimmung dieser Entfernung des Authentikationselementes vom zu sichernden Objekt.

Der Erfindung liegt als technisches Problem die Bereitstellung einer elektronischen Entfernungsbestimmungsvorrichtung der eingangs genannten Art, durch die mit relativ geringem Aufwand eine Bestimmung von auch relativ kurzen Entfernungen bis 1m und nach darunter möglich ist, und einer damit ausgerüsteten elektronischen Sicherungsanlage zugrunde, die insbesondere als Keylessgo-System für eine Schließanlage und/oder eine elektronische Wegfahrsperre eines Kraftfahrzeuges ausgelegt sein kann.

Die Erfindung löst dieses Problem durch die Bereitstellung einer elektronischen Entfernungsbestimmungsvorrichtung mit den Merkmalen des Anspruchs 1 und einer elektronischen Sicherungsanlage mit den Merkmalen des Anspruchs 8.

Bei der elektronischen Entfernungsbestimmungsvorrichtung nach Anspruch 1 sind in beiden Objekten je eine Sende- und eine Empfangseinheit vorgesehen, wobei das von einem ersten der beiden Objekte gesendete Abfragesignal vom zweiten Objekt über dessen Empfangseinheit empfangen wird, wonach das zweite Objekt über seine Sendeeinheit ein Antwortsignal zum ersten Objekt zurücksendet. Im ersten Objekt ist eine geeignete Auswerteeinheit vorgesehen, welche eine für die Entfernung zwischen den beiden Objekten indikative Phasendifferenz zwischen dem abgestrahlten Abfragesignal und dem daraufhin empfangenen Antwortsignal ermittelt, aus der sich dann die gesuchte Entfernung bestimmen läßt. Durch die aktive Erzeugung und Abstrahlung des Antwortsignals bleibt die Vorrichtung im Gegensatz zu Systemen, bei denen das Antwortsignal ein vom betreffenden Objekt lediglich passiv reflektiertes Signal ist, von den Reflexionseigenschaften des Objektes unabhängig. Zudem ist durch die Auswertung der Phasendifferenz zwischen Abfrage- und Antwortsignal die Bestimmung auch relativ kurzer Entfernungen bis 1m und noch darunter mit Signalen auf der Basis elektromagnetischer Wellen möglich, ohne daß es hierzu nötig ist, die Abfrage- und Antwortsignale zum Beispiel durch Kompression zeitlich sehr kurz zu halten.

Bei einer nach Anspruch 2 weitergebildeten Entfernungsbestimmungsvorrichtung ist im ersten Objekt eine Verzögerungseinheit vorgesehen, mit der intern das Abfragesignal vor dem Phasenvergleich mit dem zurückgesendeten Antwortsignal um eine Zeitspanne verzögert wird, die der Signalverarbeitungszeit im zweiten Objekt entspricht, d.h. der dortigen Zeitdifferenz zwischen dem Empfangsbeginn des Abfragesignals und dem Sendebeginn des Antwortsignals. Dies ermöglicht von Beginn des Entfernungsbestimmungsvorgangs an einen zeitrichtigen Vergleich zwischen Abfragesignal und Antwortsignal, so daß eine durch Signalverarbeitungsverzögerung bedingte Phasendifferenz zwischen Abfrage- und Antwortsignal vermieden wird.

Bei einer nach Anspruch 3 weitergebildeten Entfernungsbestimmungsvorrichtung ist in dem das Abfragesignal empfangenden, zweiten Objekt zur Erzeugung des Antwortsignals eine vom empfangenen Abfragesignal getriggerte Signalerzeugungseinheit mit synchronisierendem PLL (Phase-Locked-Loop) -Schaltkreis vorgesehen. Dies hat den besonderen Vorteil, daß eine bleibende Synchronisation zwischen dem Abfragesignal und dem Antwortsignal gewährleistet wird, was Phasendifferenzen aufgrund von Frequenzschwankungen der das Antwortsignal generierenden Signalerzeugungseinheit in Bezug auf das Abfragesignal vermeidet.

Bei einer nach Anspruch 4 weitergebildeten Entfernungsbestimmungsvorrichtung beinhaltet die Auswerteeinheit ein ExklusivODER-Gatter, dem das Abfrage- und das Antwortsignal über einen jeweiligen Eingang zugeführt werden. Das Exklusiv-ODER-Gatter unterscheidet die Zeiträume mit gleichem Signalpegel von denen mit unterschiedlichem Signalpegel von Abfrage- und Antwortsignal und erzeugt daher ein für die Phasendifferenz zwischen beiden Signalen repräsentatives Ausgangssignal, das geeignet weiterverarbeitet werden kann. Diese Weiterverarbeitung kann z.B. eine Effektivwertbildung des Ausgangssignals des Exklusiv-ODER-Gatters beinhalten, wonach der erzeugte Effektivwert ein Maß für die Entfernung zwischen den beiden Objekten darstellt.

Eine derartige Effektivwertbildung ist in einer nach Anspruch 5 weitergebildeten Entfernungsbestimmungsvorrichtung mit einer Schwellwertvergleichseinheit kombiniert, die den gebildeten Effektivwert des Ausgangssignals des Exklusiv-ODER-Gatters mit einem fest oder vorzugsweise variabel vorgebbaren Schwellwert vergleicht. Die Schwellwertvorgabe kann dazu dienen, geringe Phasendifferenzen zwischen Abfrage- und Antwortsignal aufgrund von Signalverarbeitungstoleranzen der verschiedenen Komponenten der Vorrichtung zu unterdrücken oder eine Schwelle zu setzen, die einem Entfernungsschwellwert entspricht, dessen Über- oder Unterschreiten durch die tatsächlich ermittelte Entfernung erkannt werden soll. So kann z.B. festgestellt werden, ob die beiden Objekte um mehr als einen vorgebbaren Maximalabstand voneinander entfernt sind oder nicht.

Bei einer nach Anspruch 6 weitergebildeten Entfernungsbestimmungsvorrichtung mit auswertendem Exklusiv-ODER-Gatter beinhaltet die weitere Auswertung das Aufladen eines zu diesem Zweck vorgesehenen Kondensators mit dem Ausgangssignal des Exklusiv-ODER -Gatters. Die beim Laden ansteigende Kondensatorspannung wird in einer nachgeschalteten Schwellwertvergleichseinheit mit einer fest oder vorzugsweise variabel vorgegebenen Schwellwertspannung verglichen. Die Zeit zum Aufladen des Kondensators bis zur Schwellwertspannung ist dann repräsentativ für einen entsprechenden Schwellwert der Entfernung zwischen den beiden Objekten. Auf diese Weise kann z.B. wiederum eine Maximalentfernung vorgegeben und festgestellt werden, ob die tatsächliche Entfernung zwischen den beiden Objekten über der Maximalentfernung liegt oder nicht.

Eine nach Anspruch 7 weitergebildete Entfernungsbestimmungsvorrichtung erlaubt die Bestimmung von größeren Entfernungen, die Phasendifferenzen zwischen Abfrage- und Antwortsignal von mehr als der Breite eines typischerweise verwendeten einzelnen Impulses dieser Signale entsprechen und daher aus einer Phasendifferenzauswertung eines aus regelmäßig aufeinanderfolgenden Einzelimpulsen bestehenden Signals wegen der Periodizität der Phasendifferenz nicht mehr eindeutig ermittelt werden können. Dazu beinhaltet dann das abfragesignalsendende Objekt eine Entfernungscodewort-Erzeugungseinheit, die ein vorgebbares Entfernungscodewort als digitales Datenwort erzeugt, das in diesem Fall zwecks Bestimmung einer größeren Entfernung als Abfragesignal abgestrahlt wird. Das im anderen Objekt daraufhin als gleiches Datenwort erzeugte Antwortsignal wird dann von der Auswerteeinheit hinsichtlich eines eventuellen entfernungsbedingten Zeitversatzes gegenüber dem Abfragesignal-Datenwort geprüft. Mit dieser Vorgehensweise lassen sich auch entfernungsbedingte Verschiebungen zwischen digitalen Abfrage- und Antwortsignalen von mehr als 1Bit des Datenwortes feststellen.

Die Sicherungsanlage nach Anspruch 8 ist dadurch charakterisiert, daß sie mit einer Entfernungsbestimmungsvorrichtung nach einem der Ansprüche 1 bis 7 ausgerüstet ist. Mit dieser kann die Entfernung des Authentikationselementes, mit der sich ein dieses mitführender Benutzer gegenüber der Sicherungsanlage als berechtigt ausweist, zu einem Objekt bestimmt werden, das mit einer oder mehreren Sicherungseinheiten der Sicherungsanlage gesichert ist. Insbesondere kann es sich bei der Sicherungsanlage um eine als Keyless-go-System ausgelegte Schließanlage und/oder elektronische Wegfahrsperre eines Kraftfahrzeuges handeln. Die Bestimmung der Entfernung des Authentikationselementes vom zu sichernden Objekt kann z.B. dazu genutzt werden, gewisse Steuerbefehle für die Sicherungsanlage nur zuzulassen, wenn sich das Authentikationselement und damit der dieses mitführende Systemnutzer innerhalb eines vorgegebenen Entfernungsbereichs des zu sichernden Objektes befindet, wobei für unterschiedliche Sicherungsaktionen der Sicherungsanlage bei Bedarf unterschiedliche Entfernungsbereiche definiert sein können.

Vorteilhafte Ausführungsformen der Erfindung sind in den Zeichnungen dargestellt und werden nachfolgend beschrieben. Hierbei zeigen:
- Fig. 1: eine schematische Darstellung eines Authentikationsvorgangs mit Authentikationselement -Entfernungsbestimmung bei einer Fahrzeugschließanlage vom Keyless-go-Typ mit elektronischer Entfernungsbestimmungsvorrichtung,
- Fig. 2: ein Blockschaltbild eines fahrzeugseitigen Abfrage- und Auswerteteils der für die Fahrzeugschließanlage von Fig. 1 verwendeten Entfernungsbestimmungsvorrichtung,
- Fig. 3: Signalverlaufsdiagramme zur Veranschaulichung der Funktionsweise des Abfrage- und Auswerteteils von Fig. 2,
- Fig. 4: ein Blockschaltbild einer Variante des Abfrage- und Auswerteteils von Fig. 2,
- Fig. 5: ein Blockschaltbild einer weiteren Variante des Abfrage- und Auswerteteils von Fig. 2 und
- Fig. 6: ein Blockschaltbild eines im Authentikationselement angeordneten Antwortteils der für die Fahrzeugschließanlage von Fig. 1 verwendeten Entfernungsbestimmungsvorrichtung.

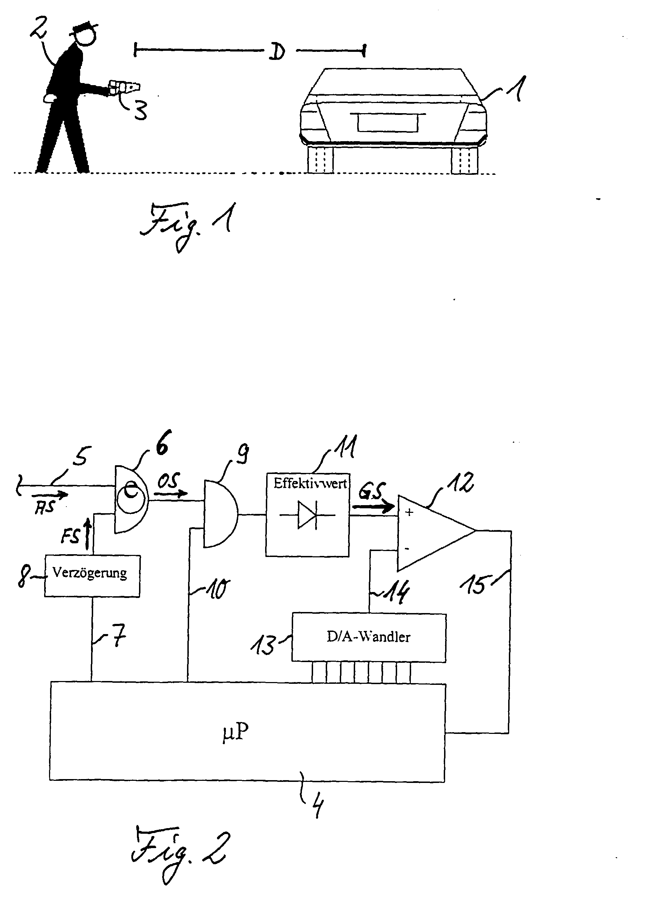

Fig. 1 zeigt schematisch einen typischen Authentikationsvorgang bei einer als Keyless-go-System ausgelegten Fahrzeugschließanlage. Die Schließanlage dient in diesem Beispiel zur Zugangssicherung eines Personenkraftwagens 1, der von einem Systemnutzer 2 nur dann betreten werden kann, wenn ein von ihm mitgeführtes Authentikationselement 3 für das betreffende Fahrzeug 1 gültig ist, was mit dem Authentikationsvorgang geprüft wird. Die Schließanlage ist hierbei mit einer elektronischen Entfernungsbestimmungsvorrichtung ausgerüstet, mit der sie die Entfernung D des mit ihrem fahrzeugseitigen Schließanlagenteil über eine zugehörige Funkstrecke kommunizierenden Authentikationselementes 3 bestimmt. Dies dient dazu, jedenfalls einen Teil der verschiedenen, von der Schließanlage ausgeübten Schließaktionen für ver- und entriegelbare Schließeinheiten, die an den Fahrzeugtüren und am Heckdeckel angeordnet sind, in Abhängigkeit von der ermittelten Entfernung D des Authentikationselementes 3 auszulösen. Beispielsweise kann dadurch vorgesehen werden, eine Schließaktion durch die Schließanlage nur auszulösen, wenn sich das Authentikationselement 3 nicht weiter als ein vorgebbarer Maximalabstand vom Fahrzeug 1 entfernt befindet. Dieser Maximalabstand kann beispielsweise im Bereich von einigen Metern liegen. Mit dieser Maßnahme läßt sich z.B. verhindern, daß die Schließeinheiten schon in den entriegelten Zustand gesetzt werden, wenn sich ein berechtigter Systemnutzer mit gültigem Authentikationselement noch relativ weit vom Fahrzeug 1 entfernt befindet, und es dadurch einem Unberechtigten möglich wird, das Fahrzeug vor dem berechtigten Systemnutzer zu öffnen. Das Authentikationselement 3 kann durch eine Chipkarte, einen Transponder oder eine andere, hierfür geläufige Einheit realisiert sein. Statt vom Keyless-goTyp kann die Fahrzeugschließanlage auch von einem anderen Typ sein, insbesondere einem solchen, bei dem die Authentikationselemente von sogenannten elektronischen, vom Fahrzeugnutzer zu betätigenden Schlüsseln gebildet sind.

Verschiedene vorteilhafte Realisierungsmöglichkeiten für die elektronische Entfernungsbestimmungsvorrichtung, die in einer derartigen Schließanlage, aber auch in anderen Sicherungsanlagen von Kraftfahrzeugen, z.B. elektronischen Wegfahrsperren, oder von anderen mobilen oder stationären, zu sichernden Objekten und allgemein zur Bestimmung der Entfernung zweier beliebiger Objekte vorgesehen sein kann, werden nachfolgend unter Bezugnahme auf die Fig. 2 bis 6 näher erläutert. Allen diesen Entfernungsbestimmungsvorrichtungen ist gemeinsam, daß sie im einen Objekt, im Fall der Schließanlage gemäß Fig. 1 vorzugsweise im Fahrzeug 1, einen Abfrage- und Auswerteteil und im anderen Objekt, im Fall von Fig. 1 im jeweiligen Authentikationselement 3, einen Antwortteil umfassen. Der Abfrage- und Auswerteteil generiert ein Abfragesignal und strahlt dieses ab, während der Antwortteil das gesendete Abfragesignal empfängt und daraufhin ein zugehöriges Antwortsignal generiert und zurücksendet. Der Abfrage- und Auswerteteil ermittelt dann eine für die Entfernung zwischen ihm und dem Antwortteil repräsentative Phasendifferenz zwischen dem Abfragesignal und dem Antwortsignal, so daß daraus die Entfernung zwischen den beiden Objekten bestimmt werden kann, in denen der Abfrage- und Auswerteteil bzw. der Antwortteil untergebracht sind.

Bei einer angenommenen Entfernung von 5m ergibt sich unter der weiteren Annahme, daß sich die Abfrage- und Antwortsignale in Form elektromagnetischer Wellen mit Lichtgeschwindigkeit ausbreiten, eine reine Laufzeit für den Hinweg des Abfragesignals und den Rückweg des Antwortsignals von ca. 33ns. Dies bedeutet, daß die Abfrage- und Antwortsignale und der sie auswertende Auswerteteil so auszulegen sind, daß Phasendifferenzen von Abfrage- und Antwortsignal, die derartigen Laufzeitunterschieden in der Größenordnung ab einigen Nanosekunden entsprechen, sicher erkannt werden. Dabei ist die Entfernungsbestimmungsvorrichtung so ausgelegt, daß das Abfrage- und das Antwortsignal nicht aus jeweils nur einem Einzelimpuls bestehen brauchen, deren Laufzeitunterschied gemessen wird, sondern jeweils aus Impulszügen aufgebaut sein können, deren gegenseitige Phasendifferenz bestimmt wird.

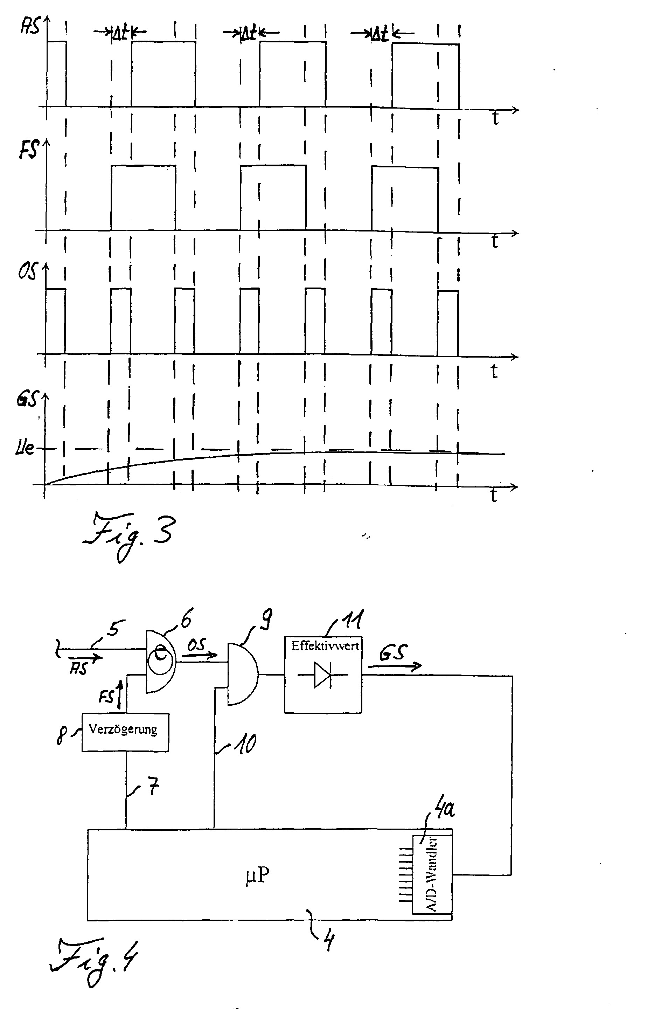

Eine erste Realisierung eines für diesen Zweck geeigneten Abfrage- und Auswerteteils ist in Fig. 2 dargestellt. Er enthält als Kernstück einen Mikroprozessor 4, der ein im zweitobersten Diagramm von Fig. 3 widergegebenes Rechteckimpulssignal FS als Abfragesignal erzeugt und in nicht näher gezeigter, herkömmlicher Weise über eine nicht gezeigte Sendeeinheit abstrahlt. Der um den gesuchten Abstand vom Abfrage- und Auswerteteil entfernte Antwortteil generiert nach Empfang des vom Mikroprozessor 4 gesendeten Abfragesignals über eine zugehörige Empfangseinheit ein gleichartiges Antwortsignal AS, wie es im obersten Diagramm von Fig. 3 wiedergegeben ist, und strahlt dieses über eine zugehörige Sendeeinheit ab. Der Abfrage- und Auswerteteil empfängt das Antwortsignal AS über eine nicht gezeigte Empfangseinheit, die es über eine Antwortsignalleitung 5 einem ersten Eingang eines Exklusiv-ODER-Gatters 6 zuführt. Parallel dazu gibt der Mikroprozessor 4 das von ihm erzeugte Abfragesignal über eine Verzögerungsleitung 7 an eine Signalverzögerungseinheit 8 ab, die so ausgelegt ist, daß sie das Abfragesignal FS genau um die Signalverarbeitungszeit verzögert, die der Antwortteil für die Signalverarbeitung vom Beginn des Empfangs des Abfragesignals FS bis zum Beginn des Sendens des Antwortsignals AS benötigt. Das solchermaßen verzögerte Abfragesignal FS gibt die Verzögerungseinheit 8 an einen zweiten Eingang des Exklusiv-ODER-Gatters 6 ab. An den beiden Eingängen des Exklusiv-ODER-Gatters 6 liegen somit das Abfragesignal FS und das Antwortsignal AS in einer Form an, bei welcher jeglicher von der Signalverarbeitungszeit im Antwortteil verursachter Phasendifferenzanteil kompensiert ist. Eine Phasendifferenz Δt, wie sie in den zeitsynchron übereinanderliegenden Diagrammen von Fig. 3 beispielhaft angenommen ist, ist folglich, Synchronität zwischen Abfragesignal FS und Antwortsignal AS vorausgesetzt, allein auf den Abstand zwischen Abfrage- und Auswerteteil einerseits und Antwortteil andererseits zurückzuführen. Solange der gesuchte Abstand keinem Signallaufzeitunterschied entspricht, der größer als die Periodizitätslänge der Abfrage- und Antwortsignale FS, AS ist, ist die auftretende Phasendifferenz Δt somit ein eindeutiges Maß für diesen Abstand.

Das Exklusiv-ODER-Gatter 6 erzeugt aus der entsprechenden Verknüpfung des zugeführten Antwortsignals AS und des geeignet verzögerten Abfragesignals FS, wie sie in den beiden obersten Diagrammen von Fig. 3 für einen Beispielsfall dargestellt sind, ein Ausgangssignal OS, wie es für das Beispiel von Fig. 3 im dortigen zweituntersten Diagramm wiedergegeben ist. Es liegt gemäß der gewählten Exklusiv-ODER-Verknüpfung immer genau dann auf hohem Pegel, wenn von dem Abfragesignal FS und dem Antwortsignal AS das eine auf hohem und das andere auf niedrigem Pegel liegt. Mit anderen Worten besteht das Ausgangssignal OS des Exklusiv-ODER-Gatters 6 aus Rechteckimpulsen mit einer der entfernungsbedingten Phasendifferenz Δt entsprechenden Impulsbreite. Es trägt auf diese Weise die Phasendifferenzinformation mit sich.

Das Ausgangssignal OS des Exklusiv-ODER-Gatters 6 wird einem Eingang eines anschließenden UND-Gatters 9 zugeführt, dessen anderer Eingang über eine Steuerleitung 10 von einem zugehörigen Steuersignal des Mikroprozessors 4 beaufschlagt wird. Das UND-Gatter 9 dient lediglich zur Steuerung der Zeiträume, zu denen eine Entfernungsauswertung durch Weiterverarbeitung des Ausgangssignals OS des Exklusiv-ODER-Gatters 6 erfolgen soll. Genau für diese Zeiträume beaufschlagt der Mikroprozessor 4 den zugehörigen Eingang des UND-Gatters 9 mit einem hohen Signalpegel, so daß das UND-Gatter 9 das Ausgangssignal OS des Exklusiv-ODER-Gatters 6 durchläßt, während diese Signalweiterleitung gesperrt bleibt, solange der Mikroprozessor 4 den zugehörigen Eingang des UND-Gatters 9 mit einem niedrigen Signalpegel beaufschlagt.

An das UND-Gatter 9 schließt sich ein Effektivwertbildner 11 an, der das Rechteckimpuls-Ausgangssignal OS des Exklusiv-ODER-Gatters 6 in ein Gleichspannungssignal GS transformiert, wie es für das Beispiel von Fig. 3 im dortigen untersten Diagramm wiedergegeben ist. Speziell ist dort der anfängliche Anstieg des Gleichspannungssignals GS bis zum Spannungseffektivwert Ue des Ausgangssignals OS des Exklusiv-ODER-Gatters 6 veranschaulicht. Da dieser Effektivwert Ue in eindeutiger Weise von der Impulsbreite dieses Ausgangssignals OS abhängt, ist er in gleicher Weise wie die Breite von dessen Rechteckimpulsen ein Maß für die gesuchte Entfernung zwischen den beiden Objekten. Somit kann aus dem sich ergebenden Spannungseffektivwert Ue die gesuchte Objektentfernung bestimmt werden.

Im Abfrage- und Auswerteteil von Fig. 2 ist des weiteren eine Schwellwertvergleichseinheit vorgesehen, mit welcher der vom Effektivwertbildner 11 ermittelte Spannungseffektivwert Ue mit einem variabel vorgebbaren Schwellwert verglichen werden kann. Dazu beinhaltet die Schwellwertvergleichseinheit einen Komparator 12, dessen nicht-invertierendem Eingang das Ausgangssignal GS des Effektivwertbildners 11 zugeführt ist, während sein invertierender Eingang von einer Schwellwertspannung beaufschlagt wird, die ihm vom Mikroprozessor 4 über einen D/A-Wandler 13 und eine Schwellwertleitung 14 zugeführt wird. Über den Mikroprozessor 4 kann der jeweils gewünschte Spannungsschwellwert variabel eingestellt werden. Je nachdem, ob der vom Effektivwertbildner 11 bestimmte Effektivwert Ue des Ausgangssignals OS des Exklusiv-ODER-Gatters 6 größer oder kleiner als der eingestellte Spannungsschwellwert ist, gibt der Komparator 12 unterschiedliche Ausgangssignale über eine Auswerteleitung 15 an den Mikroprozessor 4 ab.

Mit der Schwellwertvergleichseinheit können Toleranzen der verschiedenen Systemkomponenten, insbesondere der Verzögerungseinheit 8, und die Signalverarbeitungszeit im Antwortteil ausgeglichen werden, indem am jeweiligen realen System ein entsprechender Spannungsschwellwert eingestellt wird, der eine von solchen Fertigungs- oder Betriebstoleranzen verursachte Phasendifferenz zwischen Abfragesignal FS und Antwortsignal AS kompensiert, die nicht auf die endliche Signallaufzeit von Abfrage- und Antwortsignal zwischen Abfrage- und Auswerteteil einerseits und Antwortteil andererseits zurückzuführen ist. Des weiteren kann zusätzlich oder alternativ zu dieser Toleranzen bereinigenden Maßnahme vorgesehen sein, die Schwellwertvergleichseinheit dafür zu verwenden, durch Einstellen eines entsprechenden Spannungsschwellwertes einen Abstandsschwellwert zu definieren. Wie sich aus der obigen Beschreibung der verschiedenen Signale ergibt, steigt hierbei mit wachsendem Spannungsschwellwert der zugehörige Entfernungsschwellwert. Der Mikroprozessor 4 kann dann anhand des Komparatorausgangssignals erkennen, ob die die tatsächliche aktuell gemessene Entfernung größer oder kleiner als der vorgegebene Entfernungsschwellwert ist, um davon abhängig unterschiedliche weitere Steuerungsmaßnahmen vorzunehmen. So kann im Fall der Schließanlage von Fig. 1 vorgesehen sein, daß auf diese Weise ein gewisser Maximalabstand zwischen Authentikationselement 3 und Fahrzeug 1 vorgegeben wird und die Auslösung einer Schließaktion der Schließanlage nur dann erfolgt, wenn sich das Authentikationselement 3 nicht weiter als der vorgegebene Maximalabstand vom Fahrzeug 1 entfernt befindet.

In den Fig. 4 und 5 sind zwei weitere mögliche Realisierungen für den Abfrage- und Auswerteteil der Entfernungsbestimmungsvorrichtung dargestellt, die derjenigen von Fig. 2 weitgehend ähnlich sind, wobei für funktionell gleiche Elemente dieselben Bezugszeichen verwendet sind und insoweit auf die obige Beschreibung zu Fig. 2 verwiesen werden kann.

Der Abfrage- und Auswerteteil von Fig. 4 entspricht demjenigen von Fig. 2 mit der Ausnahme, daß die Schwellwertvergleichseinheit vollständig in den Mikroprozessor 4 integriert ist und der analoge Komparator 12 sowie der D/A-Wandler 13 von Fig. 2 entfallen. Diese Systemauslegung kann für den Fall gewählt werden, daß der Mikroprozessor 4 einen integrierten A/D-Wandler 4a enthält, dem dann das Ausgangssignal GS des Effektivwertbildners 11 zugeführt wird. Dieser integrierte A/D-Wandler 4a wandelt den analogen Spannungseffektivwert Ue des Effektivwertbildner-Ausgangssignals GS in einen zugehörigen Digitalwert um, der vom Mikroprozessor 4 selbst mit einem digital vorgegebenen Spannungsschwellwert verglichen werden kann. Im übrigen gelten die obigen Erläuterungen der Schwellwertvergleichseinheit von Fig. 2 in gleicher Weise für die im Fall von Fig. 4 in den Mikroprozessor 4 integrierte Schwellwertvergleichseinheit.

Bei der Variante von Fig. 5 erfolgt die Auswertung des Ausgangssignals OS des Exklusiv-ODER-Gatters 6 über eine Kondensatorladezeitermittlung. Dazu ist dieses Ausgangssignal OS über eine Diodeneinheit 16 und einen Widerstand R1 zu einem Anschluß eines Kondensators C geführt, dessen gegenüberliegender Anschluß an Masse gelegt ist. Parallel zum Kondensator C ist ein Schalttransistor T1 vorgesehen, der vom Mikroprozessor 4 über ein Steuersignal wahlweise leitend und sperrend geschaltet werden kann, das vom Mikroprozessor 4 über eine Steuerleitung 17 zur Basis des Transistors T1 geführt ist. Dies dient dazu, den Auswerteteil nach beendetem Auswertevorgang in den Ausgangszustand zurückzusetzen und dazu insbesondere den Kondensator C wieder vollständig zu entladen, wofür der Schalttransistor T1 in seinen leitenden Zustand gesteuert wird.

Zur Durchführung eines Entfernungsbestimmungsvorgangs wird der Schalttransistor T1 in seinen Sperrzustand gesteuert, und der Kondensator C wird dann durch die aufeinanderfolgenden Rechteckimpulse des Ausgangssignals OS des Exklusiv-ODER-Gatters 6 je nach Phasendifferenz zwischen Abfragesignal FS und Antwortsignal AS mehr oder weniger schnell aufgeladen. Die Zeitdauer bis zum Erreichen eines bestimmten Kondensatorspannungswertes ist somit repräsentativ für die Phasendifferenz zwischen Abfragesignal FS und Antwortsignal AS und damit für die gesuchte Objektentfernung. Im Beispiel von Fig. 5 wird dies wiederum mit Hilfe einer Schwellwertvergleichseinheit weiter dahingehend ausgewertet, daß festgestellt wird, wann die Spannung am Kondensator C einen variabel vorgebbaren Spannungsschwellwert übersteigt.

Die Schwellwertvergleichseinheit besteht in diesem Fall aus einem Komparator 12a, an dessen nicht-invertierenden Eingang die Kondensatorspannung angelegt ist, während an seinem invertierenden Eingang die Schwellwertspannung anliegt, die mittels eines Spannungsteilers aus zwei Widerständen R2, R3 auf einen gewünschten Wert eingestellt werden kann. Das dem Mikroprozessor 4 über eine Auswerteleitung 15a zugeführte Komparatorausgangssignal ändert sich zu dem Zeitpunkt, zu dem die Kondensatorspannung die Schwellwertspannung übersteigt. Im Mikroprozessor 4 ist das Komparatorausgangssignal zu einem Start/Stop-Anschluß eines internen Zählers 4b geführt, wobei dieger Zähler 4b im Mikroprozessor 4 mit der Auslösung eines Entfernungsbestimmungsvorgangs gestartet wird. Sobald die Kondensatorspannung über die Schwellwertspannung ansteigt, stoppt das sich dadurch ändernde Komparatorausgangssignal den Zähler 4b, von dem somit die Kondensatorladezeit abgelesen werden kann, aus der dann die zugehörige Objektentfernung abgeleitet wird. Mit kleiner werdender Objektentfernung erhöht sich hierbei die Kondensatorladezeit wegen der schmaler werdenden Rechteckimpulse des Ausgangssignals OS des Exklusiv-ODER-Gatters 6. Das Rücksetzen des Zählers 4b erfolgt mit demselben Steuersignal, mit dem der Mikroprozessor 4 den Schalttransistor T1 leitend schaltet. Sobald dieses RücksetzSteuersignal zwecks Beginn eines Auswertevorgangs nicht mehr anliegt, läuft der Zähler 4b los.

Wie erwähnt, ist mit den vorstehend beschriebenen Ausführungsbeispielen eine eindeutige Entfernungsbestimmung nur bis auf ganzzahlige Vielfache der Periodizitätslänge der Phasendifferenz zwischen Abfragesignal und Antwortsignal und somit bis zu einer gewissen maximalen Entfernung von z.B. bis etwa 100m möglich. Für eine Messung größerer Entfernungen kann die Entfernungsbestimmungsvorrichtung mit der folgenden, nicht weiter gezeigten Zusatzfunktionalität ausgerüstet sein. Der Mikroprozessor im Abfrage- und Auswerteteil generiert für eine solche Messung großer Entfernungen von z.B. über 100m ein Abfragesignal im Form eines vorgebbaren digitalen Codewortes. Im Antwortteil wird bei empfangenem Codewort ein gleichartiges Codewort als Antwortsignal generiert und zurückgesendet. Das von einer Empfangseinheit des Abfrage- und Auswerteteils empfangene Antwortsignal-Codewort kann direkt dem Mikroprozessor zur Auswertung zugeführt werden. Parallel dazu führt der Mikroprozessor eine zeitgleiche Kopie des abgestrahlten Abfragesignal-Codeworts der Signalverzögerungseinheit zu, die es um die Signalverarbeitungszeit im Antwortteil verzögert wieder an den Mikroprozessor zurückleitet. Der Mikroprozessor prüft dann das verzögerte AbfragesignalCodewort und das Antwortsignal-Codewort auf Übereinstimmung bzw. auf eine etwaige zeitliche Verschiebung beider Codeworte.

Da im Codewort die Einzelimpulse bitweise unterschiedlich und nicht periodisch aufeinanderfolgen, kann durch diesen Codewortvergleich auch eine laufzeitbedingte und damit entfernungsbedingte Zeitverschiebung zwischen Abfragesignal- und Antwortsignal-Codewort von mehr als 1Bit erkannt werden, so daß sich mit dieser Vorgehensweise auch größere Entfernungen zuverlässig bestimmen lassen. Hierbei kann ebenfalls wieder die Vorgabe eines gewünschten Entfernungsschwellwertes vorgesehen sein, insbesondere in Form einer vorgegebenen maximalen Bitverschiebung zwischen Abfragesignal- und Antwortsignal-Codewort. So kann z.B. vorgesehen sein, die einer Bitverschiebung von 1Bit entsprechende Objektentfernung als Entfernungsschwellwert festzulegen, d.h. je nachdem, ob die verglichenen Codeworte um mehr oder weniger als 1Bit zeitlich verschoben sind, unterschiedliche Maßnahmen entsprechend der Tatsache zu ergreifen, daß sich dann die beiden Ojekte in größerem bzw. kleinerem Abstand als dem Entfernungsschwellwert voneinander befinden.

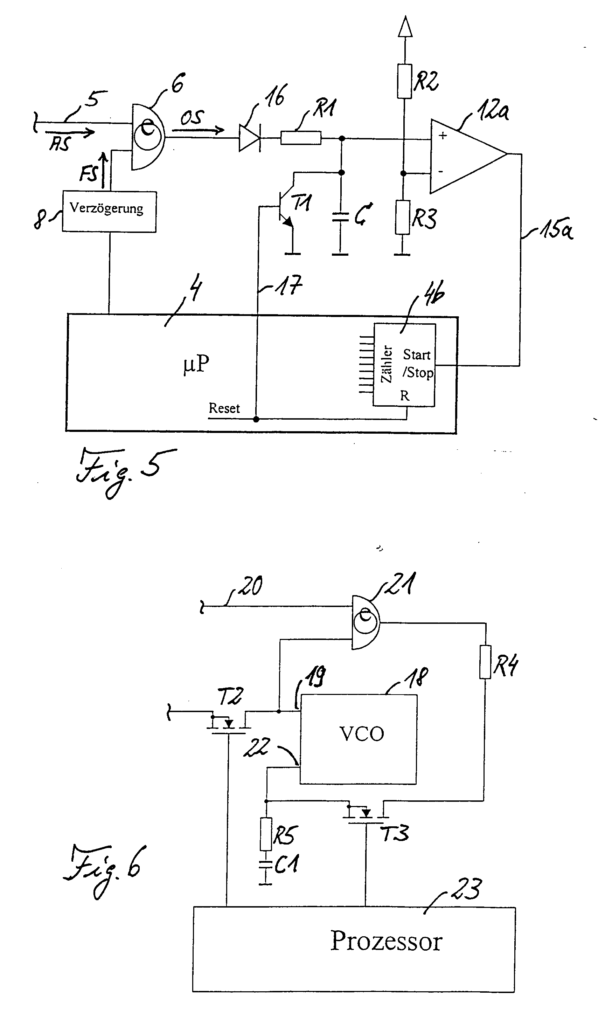

Die Genauigkeit der Entfernungsbestimmung, die insbesondere für den Fall kleinerer Entfernungen von Bedeutung ist, läßt sich dadurch steigern, daß auf die Einhaltung einer möglichst exakten Synchronisation des vom Antwortteil zurückgesendeten Antwortsignals relativ zum Abfragesignal geachtet wird. Denn Abweichungen von dieser Synchronität können zu Phasendifferenzen zwischen Abfrage- und Antwortsignal führen, die nicht entfernungsbedingt sind. Eine vorteilhafte Möglichkeit zur Gewährleistung der Synchronisierung des Antwortsignals mit dem Abfragesignal wird durch einen Aufbau des Antwortteils bereitgestellt, wie er in Fig. 6 dargestellt ist. Der dort gezeigte Antwortteil der Entfernungsbestimmungsvorrichtung beinhaltet zur Antwortsignalerzeugung einen spannungsgesteuerten Oszillator (VCO) 18, dessen an einem Ausgang 19 abgegebenes Signal über einen ersten Feldeffekt-Schalttransistor T2 einer nicht gezeigten Sendeeinheit zugeführt wird, die es als Antwortsignal abstrahlt. Das vom Abfrage- und Auswerteteil gesendete Abfragesignal wird vom Antwortteil über eine nicht gezeigte Empfangseinheit empfangen und von dieser über eine Abfragesignalleitung 20 dem einen Eingang eines Exkluxiv-ODER-Gatters 21 zugeführt, dessen anderer Eingang vom Ausgangssignal des spannungsgesteuerten Oszillators 18 beaufschlagt wird. Das Ausgangssignal dieses Exklusiv-ODER-Gatters 21 wird über einen ersten Widerstand R4 und einen zweiten Feldeffekt-Schalttransistor T3 an einen Steuereingang 22 des spannungsgesteuerten Oszillators 18 angelegt, der andererseits über einen zweiten Widerstand R5 und einen Kondensator C1 an Masse angekoppelt ist.

Wie aus diesem Schaltungsaufbau gemäß Fig. 6 ersichtlich, bilden die beiden Widerstände R4, R5 und der Kondensator C1 einen Tiefpaß für das Ausgangssignal des Exklusiv-ODER-Gatters 21, so daß das Exklusiv-ODER-Gatter 21 zusammen mit diesem Tiefpaß und dem spannungsgesteuerten Oszillator 18 einen PLL-Schaltkreis bildet, mit dem der Antwortteil ein zum empfangenen Abfragesignal phasenstarres, identisches Antwortsignal erzeugt und abstrahlt. Dabei können der spannungsgesteuerte Oszillator 18 und das Exklusiv-ODER-Gatter 21 gemeinsam in einem gängigen integrierten Schaltkreisbaustein enthalten sein. Die beiden Schalttransistoren T2, T3 werden von einem Mikroprozessor 23 des Antwortteils gesteuert, wobei folgende Funktionsweise realisierbar ist.

Sobald ein vom Abfrage- und Auswerteteil gesendetes AbfrageRechteckimpulssignal vom Antwortteil empfangen wird und am betreffenden Eingang des Exklusiv-ODER-Gatters anliegt, erzeugt es über den Tiefpaß R4, R5, C1 einen entsprechenden Effektivspannungswert am Steuereingang 22 des spannungsgesteuerten Oszillators 18, der daraufhin beginnt, an seinem Ausgang 19 ein dem empfangenen Antwortsignal entsprechendes Rechteckimpulssignal bereitzustellen. Dabei bleiben zunächst der erste FeldeffektSchalttransistor T2 geöffnet und der zweite Feldeffekt-Schalttransistor T3 geschlossen. Durch die PLL-Verschaltung, bei der das Ausgangssignal des spannungsgesteuerten Oszillators 18 im Exklusiv-ODER-Gatter 21 mit dem empfangenen Antwortsignal in seiner Phasenlage verglichen wird, wird gewährleistet, daß das Ausgangssignal des spannungsgesteuerten Oszillators 18 phasenstarr mit dem empfangenen Antwortsignal ohne Phasenverschiebung zu selbigem bereitgestellt wird.

Bevor dann keine Abfragesignal-Rechteckimpulse mehr empfangen werden, wird rechtzeitig der zweite Feldeffekt-Schalttransistor T3 geöffnet, so daß der Kondensator C1 eine konstante Spannung am Steuereingang 22 des spannungsgesteuerten Oszillators 18 aufrechterhält, mit deren Hilfe der Oszillator 18 weiterhin ein zum Abfragesignal gleichartiges und phasenstarres Ausgangssignal erzeugt. Durch Schließen des ersten Feldeffekt-Schalttransistors T2 wird dieses synchronisierte Ausgangssignal des spannungsgesteuerten Oszillators 18 als Antwortsignal zur Sendeeinheit weitergeleitet und dort als Antwortsignal zum Abfrage- und Auswerteteil gesendet. Durch die Synchronisation des Antwortsignals mit dem Abfragesignal unter Verwendung des PLL-Schaltkreises ist sichergestellt, daß beim Vergleich von Antwortsignal und Abfragesignal im Abfrage- und Auswerteteil auftretende Phasendifferenzen der beiden Signale ausschließlich entfernungsbedingt und daher repräsentativ für die jeweilige Objektentfernung sind. Es versteht sich, daß die zu Fig. 6 beschriebene Signalsynchronisation sowohl für die periodischen Rechteckimpulssignale, die speziell für kürzere Entfernungen eingesetzt werden, als auch für die erwähnten Codewortsignale geeignet ist, die vorzugsweise bei größeren Entfernungen alternativ oder zusätzlich zu den periodischen Rechteckimpulssignalen eingesetzt werden können.

Es versteht sich, daß die oben beschriebenen ebenso wie weitere, für den Fachmann mögliche Realisierungen der erfindungsgemäßen elektronischen Entfernungsbestimmungsvorrichtung nicht nur, wie gezeigt, für Schließanlagen und elektronische Wegfahrsperren von Kraftfahrzeugen zur Authentikationselement-Entfernungsbestimmung, sondern wie erwähnt für beliebige andere Anwendungen geeignet ist, bei denen die Entfernung zwischen einem ersten, mit einem entsprechenden Abfrage- und Auswerteteil ausgerüsteten Objekt und einem zweiten, mit einem zugehörigen Antwortteil ausgerüsteten Objekt bestimmt werden soll.

## Patentansprüche

1. Elektronische Vorrichtung zur Bestimmung der Entfernung zwischen zwei Objekten, insbesondere der Entfernung eines Authentikationselementes einer elektronischen Fahrzeugsicherungsanlage vom Fahrzeug, mit
- Abfragesignalerzeugungsmitteln (4) in einem ersten der beiden Objekte (1, 3) zum Erzeugen und Senden eines Abfragesignals (FS),
- Abfragesignalempfangsmitteln zum Empfangen des Abfragesignals (FS) und Antwortsignalerzeugungsmitteln (18) zum Erzeugen und Senden eines Antwortsignals (AS) im zweiten Objekt (3) auf den Empfang des Anfragesignals hin,
- Antwortsignalempfangsmitteln im ersten Objekt (1) zum Empfangen des Antwortsignals (AS) und
- einer Auswerteeinheit (6 bis 11) im ersten Objekt zur Bestimmung der Entfernung zwischen den beiden Objekten anhand des Abfragesignals und des Antwortsignals,
**dadurch gekennzeichnet**, **daß**
- die Auswerteeinheit (6 bis 11) zur Bestimmung einer entfernungsindikativen Phasendifferenz (Δt) zwischen dem Abfragesignal (FS) und dem Antwortsignal (AS) eingerichtet ist.

2. Elektronische Entfernungsbestimmungsvorrichtung nach Anspruch 1, weiter
**dadurch gekennzeichnet**, **daß**
im ersten Objekt (1) eine Signalverzögerungseinheit (8) vorgesehen ist, der das erzeugte Abfragesignal (FS) parallel zu einer Abfragesignalsendeeinheit zugeführt ist und die dieses um eine der Signalverarbeitungsdauer im zweiten Objekt (3) entsprechende Zeitdauer verzögert zum Vergleich mit dem empfangenen Antwortsignal (AS) weiterleitet.

3. Elektronische Entfernungsbestimmungsvorrichtung nach Anspruch 1 oder 2, weiter
**dadurch gekennzeichnet**, **daß**
die Antwortsignalerzeugungsmittel einen PLL-Schaltkreis mit einer Signalerzeugungseinheit (18) beinhalten, die getriggert vom empfangenen Abfragesignal (FS) ein dazu synchrones Antwortsignal (AS) erzeugt.

4. Elektronische Entfernungsbestimmungsvorrichtung nach einem der Ansprüche 1 bis 3, weiter
**dadurch gekennzeichnet**, **daß**
die Auswerteeinheit ein Exklusiv-ODER-Gatter (6) beinhaltet, dem eingangsseitig zum einen das Abfragesignal (FS) und zum anderen das empfangene Antwortsignal (AS) zugeführt sind.

5. Elektronische Entfernungsbestimmungsvorrichtung nach Anspruch 4, weiter
**dadurch gekennzeichnet**, **daß**
die Auswerteeinheit eine dem Exklusiv-ODER-Gatter (6) nachgeschaltete Effektivwertbildungseinheit (11) umfaßt und dieser eine Schwellwertvergleichseinheit (12-15) nachgeschaltet ist, die den von der Effektivwertbildungseinheit abgegebenen Spannungseffektivwert (Ue) mit einem fest oder variabel vorgebbaren Spannungsschwellwert vergleicht.

6. Elektronische Entfernungsbestimmungsvorrichtung nach Anspruch 4, weiter
**dadurch gekennzeichnet**, **daß**
das Ausgangssignal (OS) des Exklusiv-ODER-Gatters (6) an einen Ladeanschluß eines Kondensators (C) geführt ist und Ladezeitbestimmungsmittel (12a, 4b) vorgesehen sind, welche die Ladezeit des Kondensator (C) bis zum Erreichen eines fest oder variabel vorgebbaren Kondensatorspannungsschwellwertes bestimmen.

7. Elektronische Entfernungsbestimmungsvorrichtung nach einem der Ansprüche 1 bis 6, weiter
**dadurch gekennzeichnet**, **daß**
die Abfragesignalerzeugungsmittel (4) zur Erzeugung eines digitalen Codewortes als Abfragesignal und die Antwortsignalerzeugungsmittel zur Erzeugung eines dem Abfragesignal-Codewort entsprechenden Codewortes als Antwortsignal eingerichtet sind und die Auswerteeinheit die Phasendifferenz zwischen dem Abfragesignal-Codewort und dem Antwortsignal-Codewort ermittelt.

8. Elektronische Sicherungsanlage, insbesondere Fahrzeugschließanlage, mit
- einem oder mehreren, an einem ersten, zu sichernden Objekt (1) angeordneten Sicherungseinheiten,
- wenigstens einem berechtigenden Authentikationselement (3) als einem zweiten, nutzerseitig mitführbaren Objekt und
- Authentikationselement-Erkennungsmitteln zur Feststellung, ob sich ein berechtigendes Authentikationselement innerhalb eines vorgebbaren Bereichs des zu sichernden Objektes befindet,
**dadurch gekennzeichnet**, **daß**
die Authentikationselement-Erkennungsmittel zur Bestimmung der Entfernung eines erkannten berechtigenden Authentikationselementes (3) vom zu sichernden Objekt (1) eingerichtet sind und hierzu eine elektronische Entfernungsbestimmungsvorrichtung nach einem der Ansprüche 1 bis 7 aufweisen.
